# EUROPÄISCHE PATENTSCHRIFT

(11) **EP 1 414 558 B1**
(45) Veröffentlichungstag und Bekanntmachung des Hinweises auf die Patenterteilung: **10.10.2007**
(21) Anmeldenummer: 02754430.3
(22) Anmeldetag: 24.07.2002
(51) Int. Cl.: B01F 5/04, B01F 15/06, F23D 14/64, H01M 8/04

(54) **VORRICHTUNG ZUR VERMISCHUNG VON FLUIDEN**
DEVICE FOR MIXING FLUIDS
DISPOSITIF POUR MELANGER DES FLUIDES

(30) Priorität: 02.08.2001 DE 10138006
(43) Veröffentlichungstag der Anmeldung: 06.05.2004
(73) Patentinhaber: ROBERT BOSCH GMBH, 70442 Stuttgart (DE)
(72) Erfinder: FAYE, Ian, 70192 Stuttgart (DE); NGUYEN-SCHAEFER, Thanh-Hung, 71679 Asperg (DE)
(86) Internationale Anmeldenummer: PCT/DE2002/002723
(87) Internationale Veröffentlichungsnummer: WO 2003/013712

(56) Entgegenhaltungen:
- DE-A- 2 356 769
- GB-A- 848 203
- GB-A- 2 149 082
- US-A- 4 472 134

## Beschreibung

Die Erfindung betrifft eine Vorrichtung zur Vermischung von Fluiden, insbesondere ein Gaseinspritzventil, eine Mischungsdüse oder eine Jetkompressionsdüse, beispielsweise zur Verwendung als Brennstoffzuführung in einer Brennstoffzelle, nach der Gattung des Hauptanspruches.

### Stand der Technik

Beim Betrieb von Brennstoffzellen ist bekannt, diesen ein Gemisch aus Wasserstoff und gesättigtem Wasserdampf zuzuführen, wobei die Gemischmenge von Wasserstoff und gesättigtem Wasserdampf sowie dessen Zusammensetzung über ein Düsenventil zudosiert bzw. eingestellt wird.

Dabei tritt vielfach das Problem auf, dass der zugeführte Wasserdampf innerhalb der Düse bzw. innerhalb des Düsenventils kondensiert, was zu einem Einfrieren und damit zu einer Düsenverstopfung bzw. einem Ausfall der Funktionalität der Düse und der nachgeschalteten Brennstoffzelle oder zu einer deutlichen Reduzierung des Wirkungsgrades der Düse führt.

Diesbezüglich ist aus der GB 2 149 082 A ein Gasbrenner bekannt, der Zuführungen für ein erstes und ein zweites Fluid aufweist, ein Mittel zur Erzeugung einer Turbulenz, sowie eine diesem Mittel in Strömungsrichtung nachgeordnete Heizeinrichtung.

Aufgabe der vorliegenden Erfindung ist die Bereitstellung einer Vorrichtung gemäß Anspruch 1 zur Vermischung von Fluiden, insbesondere zur Vermischung von Wasserstoff und insbesondere gesättigtem Wasserdampf, die auch als Brennstoffzuführung in einer Brennstoffzelle einsetzbar ist, bei der ein Ausfall durch Vereisung oder Kondensation unterbleibt.

### Vorteile der Erfindung

Die erfindungsgemäße Vorrichtung zur Vermischung von Fluiden hat den Vorteil, dass eine Reduzierung des Wirkungsgrades oder ein Ausfall beim Betrieb beispielsweise durch Kondensation, Verstopfung oder Vereisung wirksam unterdrückt wird, so dass insgesamt eine gegenüber dem Stand der Technik erheblich verbesserte Betriebssicherheit und Zuverlässigkeit erreicht wird. Insbesondere ist im Fall der erfindungsgemäßen Vorrichtung gewährleistet, dass es nicht zu einer Vereisung durch Kondensation von Wasser in deren Austrittsbereich kommt.

Vorteilhafte Weiterbildungen der Erfindung ergeben sich aus den in den Unteransprüchen genannten Maßnahmen.

So ist besonders vorteilhaft, wenn das Mittel zur Erzeugung der Turbulenz einen der Strömung des Fluids ausgesetzten bzw. in diese eingebrachten Körper, insbesondere einen Stab oder eine Anordnung von Stäben, einen Ring oder eine Anordnung von Ringen, ein Plättchen, eine Lochblende, einen Duschkopf oder ein Sieb aufweist, der insbesondere möglichst unmittelbar vor der Heizeinrichtung derart angeordnet ist, dass durch die darüber erzeugte Turbulenz eine besonders effektive Wärmeübertragung von der Heizeinrichtung in das die Heizeinrichtung umströmende Fluid erreicht wird. Zudem wird auf diese Weise das der erfindungsgemäßen Vorrichtung zugeführte Fluid auch gleichmäßiger aufgeheizt. Besonders vorteilhaft ist in diesem Zusammenhang, wenn die Heizeinrichtung unmittelbar nach dem Mittel zur Erzeugung der Turbulenz, insbesondere beabstandet parallel dazu, angeordnet ist. Im Übrigen wird eine besonders einfache Aufheizung des Fluids durch Einsatz einer elektrischen Heizeinrichtung, beispielsweise mit einem Heizdraht, einem Heizring oder einer entsprechenden Anordnung von Drähten oder Ringen, erreicht.

Eine besonders effektive Anordnung der ersten Fluidführungseinrichtung und der zweiten Fluidführungseinrichtung ergibt sich dadurch, dass die erste Fluidführungseinrichtung zumindest bereichsweise von einer zylindersymmetrischen Ausnehmung in einem vorzugsweise metallischen Grundkörper gebildet wird, die in einem in den Grundkörper eingebrachten Zentralkanal mündet, wobei sich der Zentralkanal im Weiteren dann in Richtung auf den Ausgang der Fluidmischvorrichtung vorzugsweise trichterförmig aufweitet. Die zweite Fluidführungseinrichtung ist dann bevorzugt symmetrisch in diese Ausnehmung des Grundkörpers eingesetzt, so dass das darin geführte zweite Fluid ebenfalls in den Zentralkanal mündet.

Als besonders vorteilhaft hat sich dabei herausgestellt, wenn die erste Fluidführungseinrichtung und/oder die zweite Fluidführungseinrichtung, insbesondere beide, zumindest näherungsweise die Form einer Düse oder bevorzugt eines Trichters oder einer Patrone aufweisen.

Insbesondere werden die erste Fluidführungseinrichtung und die zweite Fluidführungseinrichtung bevorzugt derart ausgebildet und angeordnet, dass die zweite Fluidführungseinrichtung das darin geführte zweite Fluid in den Zentralkanal eindüst, und dabei an dieser Stelle mit dem in der ersten Fluidführungseinrichtung geführten ersten Fluid vermischt. Insofern treffen sich das erste Fluid und das zweite Fluid zur Vermischung erstmals in einem Mischungsbereich im Bereich des Zentralkanals.

Vorteilhaft ist weiterhin, wenn mindestens eine der Fluidführungseinrichtungen zumindest bereichsweise oberflächlich mit einer Beschichtung, insbesondere einer Teflonbeschichtung, versehen ist, die einem Anhaften, einem Niederschlag oder einer Kondensation des in der Fluidführungseinrichtung geführten Fluids oder eines auf der Außenseite der Fluidführungseinrichtung mit dieser in Kontakt stehenden Fluids entgegenwirkt.

Besonders vorteilhaft ist dabei, wenn die in die Ausnehmung des Grundkörpers eingesetzte zweite Fluidführungseinrichtung auf ihrer Außenseite zumindest bereichsweise, insbesondere in einer Umgebung des Mischungsbereiches bzw. der Mündung der ersten Fluidführungseinrichtung und der zweiten Fluidführungseinrichtung in den Zentralkanal, mit der erläuterten Beschichtung versehen ist. Auf diese Weise wird gerade in dem kritischen Mischungsbereich gezielt einer Kondensation von Wasserdampf und insbesondere einer Vereisung durch eine Temperaturabsenkung beim Eindüsen entgegengewirkt.

### Zeichnungen

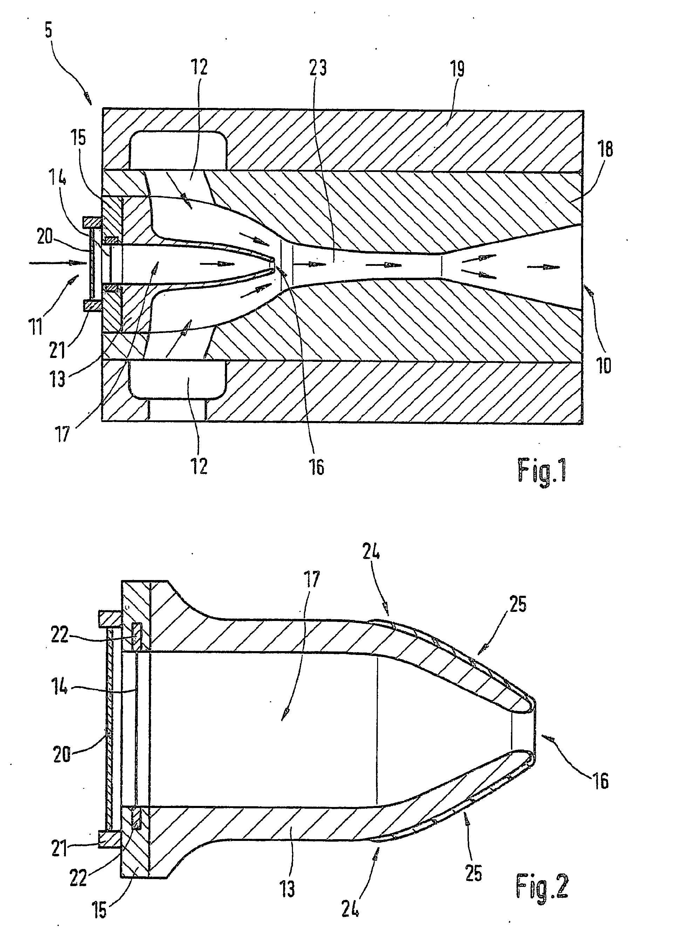

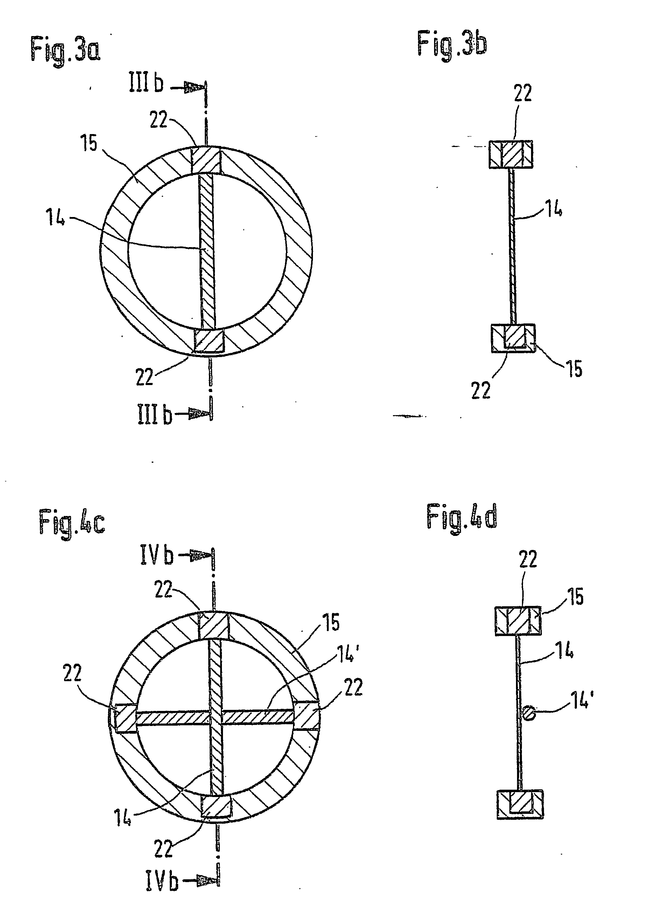

Die Erfindung wird anhand der Zeichnungen und in der nachfolgenden Beschreibung näher erläutert. Es zeigt Figur 1 einen Schnitt durch ein Ausführungsbeispiel einer Fluidmischvorrichtung, Figur 2 einen Ausschnitt aus Figur 1, Figur 3a eine Draufsicht auf die Heizeinrichtung gemäß Figur 1 oder Figur 2, Figur 3b einen Schnitt durch die Heizeinrichtung gemäß Figur 3a entlang der eingezeichneten Schnittlinie, Figur 4a eine alternative Ausführungsform der Heizeinrichtung gemäß Figur 3a, und Figur 4b einen Schnitt durch die Heizeinrichtung gemäß Figur 4a entlang der eingezeichneten Schnittlinie.

### Ausführungsbeispiele

Die Figur 1 zeigt eine Fluidmischvorrichtung 5, die als Gaseinspritzventil bzw. Mischungsdüse ausgeführt ist. Insbesondere ist die Fluidmischvorrichtung 5 eine Jetkompressionsdüse, bei der eine starke, treibende Strömung durch die Düse eine andere, schwächere Strömung mitschleppt. Beispielsweise werden in der erläuterten Fluidmischvorrichtung 5 Wasserstoff und gesättigter Wasserdampf in einem Durchmischungsrohr bzw. Vermischungsbereich innerhalb der Mischvorrichtung 5 miteinander vermischt.

Die Fluidmischvorrichtung 5 weist dazu einen Grundkörper 18 auf, der von einer Hülse 19 mit einem Ringkanal umgeben ist, über den dem Grundkörper 18 ein erstes Fluid, beispielsweise Wasserstoff oder ein wasserstoffhaltiges Gas, zuführbar ist. Weiter ist in dem Grundkörper 18 eine trichterförmige Ausnehmung vorgesehen, die in einen Zentralkanal 23 mündet, der zu einem sich trichterförmig aufweitenden Ausgang 10 der Fluidmischvorrichtung 5 führt. Die Hülse 19 bzw. der Grundkörper 18 gemäß Figur 1 ist bevorzugt zylindersymmetrisch aufgebaut.

Die Figur 1 zeigt weiter, wie im Bereich des Eingangs 11 der Fluidmischvorrichtung 5 in die erzeugte trichterförmige Ausnehmung eine zweite, im erläuterten Beispiel patronenförmig ausgebildete Fluidführungseinrichtung 13 eingesetzt ist, in deren Innerem ein zweites Fluid, beispielsweise gesättigter Wasserdampf oder eine Mischung von gesättigtem Wasserdampf mit einem Gas, geführt ist.

Durch den Einsatz der zweiten Fluidführungseinrichtung 13 in die trichterförmige Ausnehmung in dem Grundkörper 18 entsteht weiter eine erste Fluidführungseinrichtung 12, in die über den Ringkanal das erste Fluid zunächst getrennt von dem zweiten Fluid geführt ist.

Eine Mischung des in der ersten Fluidführungseinrichtung 12 geführten ersten Fluids und des in der zweiten Fluidführungseinrichtung 13 geführten zweiten Fluids erfolgt dann erstmals in einem Mischungsbereich 16, in den beide Fluidführungseinrichtungen 12, 13 münden.

Von dem Mischungsbereich 16 wird danach das entstandene Gemisch der Fluide über den Zentralkanal 23 zum Ausgang 10 der Fluidmischvorrichtung 5 geführt.

An dieser Stelle sei betont, dass die zweite Fluidführungseinrichtung 13 alternativ auch in Form eines Trichters oder einer Düse ausgebildet sein kann. Dabei ist aber stets das zweite Fluid in einem zweiten Fluidführungsbereich 17 im Inneren der zweiten Fluidführungseinrichtung 13 geführt.

In Figur 1 ist weiter dargestellt, dass im Bereich des Eingangs 11 der Fluidmischvorrichtung 5 der zweiten Fluidführungseinrichtung 13 eine Heizeinrichtung vorgeschaltet ist, die einen ersten Tragkörper 15 aufweist, der in Form eines Halteringes ausgeführt ist. Daneben besitzt die Heizeinrichtung einen elektrisch beheizten Heizdraht 14, der mit üblichen Anschlusskontaktierungen 22 mit nicht dargestellten Bauteilen bei Betrieb der Fluidmischvorrichtung 5 in bekannter Weise elektrisch beheizt wird.

Schließlich ist der Heizeinrichtung ein Mittel zur Erzeugung einer Turbulenz in dem zweiten Fluid vorgeschaltet, das im Konkreten von einem zweiten Tragkörper 21 in Form eines Tragringes und einem mit diesem Tragring bzw. zweiten Tragkörper 21 verbundenen Turbulenzerzeuger 20 gebildet wird.

Der Turbulenzerzeuger 20 ist beispielsweise ein Stab, insbesondere ein Rundstab, eine Lochblende, ein Sieb, ein Duschkopf oder eine Anordnung oder Kombination dieser Elemente.

Der Turbulenzerzeuger 20 hat die Aufgabe, in dem von dem Eingang 11 ausgehenden, der Fluidmischvorrichtung 5 zugeführten zweiten Fluid eine Turbulenz zu erzeugen, so dass über die nachgeschaltete Heizeinrichtung bzw. mittels des beheizten Heizdrahtes 14 eine besonders effektive und gleichmäßig Aufheizung des zweiten Fluides erfolgt, bevor das zweite Fluid dann über die zweite Fluidführungseinrichtung 13 in den Mischungsbereich 16 eintritt, und dort mit dem ersten Fluid vermischt wird.

Die Figur 2 die zweite Fluidführungseinrichtung 13 sowie die Heizeinrichtung und das Mittel zur Erzeugung der Turbulenz gemäß Figur 1 vergrößert. Insbesondere ist dort erkennbar, dass die zweite Fluidführungseinrichtung 13 auf ihrer Außenseite 24, die mit dem in der ersten Fluidführungseinrichtung 12 geführten ersten Fluid in Kontakt steht, mit einer Beschichtung 25 versehen ist.

Diese Beschichtung 25 ist vor allem in dem Mündungsbereich der zweiten Fluidführungseinrichtung 13 vorgesehen, d.h. dem Bereich, der in einer Umgebung des Mischungsbereiches 16 liegt.

Die Beschichtung 25 ist beispielsweise eine Teflonbeschichtung und dient dazu, ein Anhaften, insbesondere einen Niederschlag oder eine Kondensation eines Fluids auf der Außenseite 24 der zweiten Fluidführungseinrichtung 13 zu vermeiden.

Die Figur 3a zeigt eine Draufsicht auf die Heizeinrichtung gemäß den Figuren 1 bzw. 2, wobei erkennbar ist, dass die Heizeinrichtung von dem Haltering 15 und dem Heizdraht 14 gebildet wird, der entlang eines Durchmessers des Halteringes 15 verläuft. Die Figur 3b zeigt deutlicher die Anschlusskontaktierungen 22 zur elektrischen Beheizung des ersten Heizdrahtes 14.

Die Figur 4a erläutert eine zu Figur 3a alternative Ausführungsform der Heizeinrichtung, wobei zwei zueinander senkrecht verlaufende Heizdrähte 14, 14' vorgesehen sind, die jeweils über entsprechende Anschlusskontaktierungen 22 elektrisch beheizt werden. Die Figur 4b zeigt zudem, dass der erste Heizdraht 14 bzw. der zweite Heizdraht 14' beabstandet hintereinander angeordnet sind.

Im Übrigen sei noch darauf hingewiesen, dass der zweite Tragkörper 21 bzw. Tragring, abgesehen von den Anschlusskontaktierungen 22, aus einem isolierenden Material ausgeführt ist. Zudem ist in dem Ausführungsbeispiel gemäß den Figuren 4a bzw. 4b bevorzugt vorgesehen, dass in dem Bereich, in dem sich der erste Heizdraht 14 und der zweite Heizdraht 14' kreuzen, diese gegeneinander isoliert werden. Diese Isolierung kann beispielsweise eine zwischen den Heizdrähten 14, 14' im Kreuzungsbereich angeordnete isolierende Platte oder eine in diesem Bereich angebrachte isolierende Umhüllung eines der Heizdrähte 14, 14' sein.

Die Strömung der beiden Fluide in der Fluidmischvorrichtung 5 wird bei den vorstehend erläuterten Ausführungsbeispielen vor allem im Mischungsbereich 16 stark beschleunigt, so dass dort eine Strömungsgeschwindigkeit auftritt, die typischerweise in der Nähe der Schallgeschwindigkeit liegt. Mit der Zunahme der Strömungsgeschwindigkeit ist in einer Umgebung des Mischungsbereiches 16 gleichzeitig auch eine Annahme des Druckes und der Temperatur der Fluide verbunden, so dass die abgesenkte Temperatur am Ausgang 10 der Fluidmischvorrichtung 5 vielfach unterhalb der dem Druck am Ausgang 10 entsprechenden Sättigungstemperatur von Wasserdampf liegt. Insofern kann es dann, wenn die Temperatur des Fluidgemisches am Ausgang 10 unterhalb der Temperatur liegt, bei der Wasserdampf kondensiert, bei dem dort herrschenden Druck zum Einfrieren der Fluidmischvorrichtung 5 kommen, der die Heizeinrichtung durch präventive oder der Vermischung vorausgehende Aufheizung des zweiten Fluids, d.h. des beispielsweise als zweites Fluid zugeführten gesättigten Wasserdampfes, auf eine höhere Temperatur entgegenwirkt.

Konkret tritt im Fall der erläuterten Beispiele im Bereich des Ausgangs 10 der Fluidmischvorrichtung 5 bei Betrieb ohne die Heizeinrichtung eine gegenüber der am Eingang 11 herrschenden Temperatur um ca. 45°C verringerte Temperatur auf. Die Aufheizung des zweiten Fluides mit der Heizeinrichtung wird dann so geregelt, dass das Fluidgemisch am Ausgang 10 stets eine Temperatur aufweist, bei gesättigter Wasserdampf nicht kondensiert bzw. der Wasserdampf dort überhitzt ist.

Insgesamt wird durch die erläuterte Fluidmischvorrichtung 5 erreicht, dass die Temperatur des im Bereich des Ausgangs 10 austretenden Fluidgemisches höher liegt als die Sättigungstemperatur von Wasserdampf, so dass eine Wasserkondensation dort nicht auftreten kann. Damit ist mit dieser Fluidmischvorrichtung 5 eine nachgeschaltete Brennstoffzelle, für deren chemische Reaktion mit Wasserdampf befeuchteter Wasserstoff erforderlich ist, zuverlässig und ohne Störungen betreibar.

## Patentansprüche

1. Vorrichtung zur Vermischung von Fluiden, insbesondere Gaseinspritzventil, Mischungsdüse oder Jetkompressionsdüse, mit einer ersten Fluidführungseinrichtung (12) zur Führung eines ersten Fluids und einer zweiten Fluidführungseinrichtung (13) zur Führung eines zweiten Fluids, wobei die Fluide in einem mit den Fluidführungseinrichtungen (12, 13) in Verbindung stehenden Mischungsbereich (16) miteinander vermischt werden, und wobei mindestens einer der Fluidführungseinrichtungen (12, 13) ein Mittel (20) zur Erzeugung einer Turbulenz in dem betreffenden Fluid und eine dem Mittel (20) zur Erzeugung der Turbulenz hinsichtlich der Strömungsrichtung des betreffenden Fluids nachgeordnete Heizeinrichtung zugeordnet ist, mit der das Fluid vor Erreichen des Mischungsbereiches (16) aufheizbar ist, **dadurch gekennzeichnet, dass** mindestens eine der Fluidführungseinrichtungen (12, 13) zumindest bereichsweise oberflächlich mit einer Beschichtung (25) insbesondere aus Teflon, versehen ist, die einem Anhaften, einem Niederschlag oder einer Kondensation des betreffenden Fluids oder darin enthaltener Bestandteile entgegenwirkt.

2. Vorrichtung nach Anspruch 1, **dadurch gekennzeichnet, dass** das Mittel (20) zur Erzeugung der Turbulenz ein der Strömung des Fluids ausgesetzter oder in diese eingebrachter Körper, insbesondere ein Stab (20) oder eine Anordnung von Stäben, ein Ring oder eine Anordnung von Ringen, ein Plättchen, eine Lochblende, einen Duschkopf oder ein Sieb aufweist.

3. Vorrichtung nach Anspruch 1 oder 2, **dadurch gekennzeichnet, dass** das Mittel (20) zur Erzeugung der Turbulenz derart ausgebildet und/oder angeordnet ist, dass eine möglichst effektive Aufheizung des anschließend der Heizeinrichtung ausgesetzten Fluids erfolgt.

4. Vorrichtung nach einem der vorangehenden Ansprüche, **dadurch gekennzeichnet, dass** die Heizeinrichtung unmittelbar nach dem Mittel (20) zur Erzeugung der Turbulenz, insbesondere beabstandet parallel dazu, angeordnet ist.

5. Vorrichtung nach einem der vorangehenden Ansprüche, **dadurch gekennzeichnet, dass** die Heizeinrichtung eine elektrische Heizeinrichtung ist, und einen Heizdraht (14, 14') oder Heizring oder eine Anordnung von Heizdrähten (14, 14') oder Heizringen aufweist.

6. Vorrichtung nach einem der vorangehenden Ansprüche, **dadurch gekennzeichnet, dass** die erste Fluidführungseinrichtung (12) zumindest bereichsweise von einer insbesondere zylindersymmetrischen Ausnehmung in einem Grundkörper (18) gebildet ist, die in einem in den Grundkörper (18) eingebrachten Zentralkanal (23) mündet.

7. Vorrichtung nach Anspruch 6, **dadurch gekennzeichnet, dass** der Zentralkanal (20) zu einem Ausgang (10) der Fluidmischvorrichtung (5) führt und sich in einer Umgebung des Ausgangs (10) insbesondere trichterförmig aufweitet.

8. Vorrichtung nach Anspruch 6 oder 7, **dadurch gekennzeichnet, dass** die zweite Fluidführungseinrichtung (13) insbesondere symmetrisch in die Ausnehmung des Grundkörpers (18) eingesetzt ist, und in den in den Grundkörper (18) eingebrachten Zentralkanal (23) mündet.

9. Vorrichtung nach einem der vorangehenden Ansprüche, **dadurch gekennzeichnet, dass** die erste Fluidführungseinrichtung (12) und/oder die zweite Fluidführungseinrichtung (13) zumindest die Form eines Trichters, einer Patrone oder einer Düse aufweist.

10. Vorrichtung nach einem der vorangehenden Ansprüche, **dadurch gekennzeichnet, dass** die zweite Fluidführungseinrichtung (13) das darin geführte zweite Fluid in dem Mischungsbereich (16) in den Zentralkanal (23) eindüst und dabei mit dem in der ersten Fluidführungseinrichtung (12) geführten ersten Fluid vermischt.

11. Vorrichtung nach Anspruch 11, **dadurch gekennzeichnet, dass** die in die Ausnehmung des Grundkörpers (18) eingesetzte zweite Fluidführungseinrichtung (13), die auf ihrer Außenseite (24) mit dem ersten Fluid in Kontakt ist, auf dieser Außenseite (24) zumindest bereichsweise, insbesondere in einer Umgebung des Mischungsbereiches (16), mit der Beschichtung (25) versehen ist.

12. Verwendung der Vorrichtung nach einem vorangehenden Ansprüche als Gaseinspritzventil, Düsenventil, Jetkompressor oder zur Brennstoffzuführung in einer Brennstoffzelle, insbesondere zur Vermischung von Wasserstoff und Wasserdampf.

## Claims

1. Apparatus for the intermixing of fluids, in particular gas injection valve, mixing nozzle or jet compression nozzle, with a first fluid guide device (12) for guiding a first fluid and with a second fluid guide device (13) for guiding a second fluid, the fluids being intermixed with one another in a mixing region (16) connected to the fluid guide devices (12, 13), and at least one of the fluid guide devices (12, 13) being assigned a means (20) for generating turbulence in the respective fluid and a heating device which follows the turbulence-generating means (20) with regard to the direction of flow of the respective fluid and by means of which the fluid can be heated before it reaches the mixing region (16), **characterized in that** at least one of the fluid guide devices (12, 13) is provided superficially, at least in regions, with a coating (25), in particular consisting of Teflon, which counteracts an adhesion, a precipitation or a condensation of the respective fluid or of constituents contained in the latter.

2. Apparatus according to Claim 1, **characterized in that** the turbulence-generating means (20) has a body exposed to the flow of the fluid or introduced into this flow, in particular a bar (20) or an arrangement of bars, a ring or an arrangement of rings, a small plate, a perforated diaphragm, a shower head or a sieve.

3. Apparatus according to Claim 1 or 2, **characterized in that** the turbulence-generating means (20) is designed and/or arranged in such a way that as effective a heating as possible of the fluid subsequently exposed to the heating device takes place.

4. Apparatus according to one of the preceding claims, **characterized in that** the heating device is arranged directly downstream of the turbulence-generating means (20), in particular spaced in parallel apart from the latter.

5. Apparatus according to one of the preceding claims, **characterized in that** the heating device is an electrical heating device and has a resistance wire (14, 14') or a heating ring or an arrangement of resistance wires (14, 14') or of heating rings.

6. Apparatus according to one of the preceding claims, **characterized in that** the first fluid guide device (12) is formed at least in regions by an, in particular, cylindrically symmetrical recess in a basic body (18), the said recess issuing in a central duct (23) introduced into the basic body (18).

7. Apparatus according to Claim 6, **characterized in that** the central duct (20) leads to an outlet (10) of the fluid-mixing apparatus (5) and widens, in particular in a funnel-shaped manner, in the vicinity of the outlet (10).

8. Apparatus according to Claim 6 or 7, **characterized in that** the second fluid guide device (13) is inserted, in particular, symmetrically into the recess of the basic body (18) and issues into the central duct (23) introduced into the basic body (18).

9. Apparatus according to one of the preceding claims, **characterized in that** the first fluid guide device (12) and/or the second fluid guide device (13) have/has at least the form of a funnel, of a cartridge or of a nozzle.

10. Apparatus according to one of the preceding claims, **characterized in that** the second fluid guide device (13) injects the second fluid guided in it into the central duct (23) in the mixing region (16) and at the same time intermixes it with the first fluid guided in the first fluid guide device (12).

11. Apparatus according to Claim 10, **characterized in that** the second fluid guide device (13), which is inserted into the recess of the basic body (18) and which is in contact on its outside (24) with the first fluid, is provided on this outside (24), at least in regions, in particular in the vicinity of the mixing region (16), with the coating (25).

12. Use of the apparatus according to one of the preceding claims as a gas injection valve, nozzle valve or jet compressor or for fuel supply in a fuel cell, in particular for the intermixing of hydrogen and water vapour.

## Revendications

1. Dispositif de mélange de fluides, en particulier un injecteur de gaz, une buse de mélange ou une buse de compression de jet, comportant un premier dispositif de guidage de fluide (12) destiné à guider un premier fluide et un second dispositif de guidage de fluide (13) destiné à guider un second fluide, les fluides étant mélangés ensemble dans une zone de mélange (16) en liaison avec les dispositifs de guidage de fluide (12, 13), un moyen (20) qui pour produire une turbulence dans le fluide en question, est associé à au moins l'un des dispositifs de guidage de fluide (12, 13), et une installation de chauffage disposée à la suite et qui associée au moyen (20) permet de produire la turbulence eu égard à la direction d'écoulement du fluide en question, en chauffant le fluide avant son entrée dans la zone de mélange (16),
**caractérisé en ce qu'**
au moins l'un des dispositifs de guidage de fluide (12, 13) est doté au moins par zone sur sa superficie d'un revêtement (25), en particulier du téflon, qui réagit à une précipitation ou une condensation du fluide en question ou à des composants contenus dans celui-ci.

2. Dispositif selon la revendication 1,
**caractérisé en ce que**
le moyen (20) destiné à produire la turbulence présente un corps exposé à l'écoulement du fluide ou introduit dans celui-ci, en particulier une tige (20) ou un dispositif de tiges, un anneau ou un dispositif d'anneaux, une plaquette, un diaphragme à trou, un pommeau de douche ou un filtre.

3. Dispositif selon la revendication 1 ou 2,
**caractérisé en ce que**
le moyen (20) destiné à produire la turbulence est formé et/ou disposé pour obtenir un réchauffement aussi efficace que possible du fluide exposé ultérieurement à l'installation de chauffage.

4. Dispositif selon l'une quelconque des revendications précédentes,
**caractérisé en ce que**
l'installation de chauffage est directement en aval du moyen (20) destiné à produire la turbulence, en particulier écartée et parallèle à celui-ci.

5. Dispositif selon l'une quelconque des revendications précédentes,
**caractérisé en ce que**
l'installation de chauffage présente une installation de chauffage électrique et un filament chauffant (14, 14') ou un anneau chauffant ou un dispositif de filaments chauffants (14, 14') ou des anneaux chauffants.

6. Dispositif selon l'une quelconque des revendications précédentes,
**caractérisé en ce que**
le premier dispositif de guidage de fluide (12) est formé au moins par zone dans un corps de base (18) par un évidement en particulier cylindrosymétrique qui débouche dans un canal central (23) introduit dans le corps de base (18).

7. Dispositif selon la revendication 6,
**caractérisé en ce que**
le canal central (20) conduit à une sortie (10) du dispositif de mélange de fluide (5) et s'élargit dans un environnement de la sortie (10) en particulier en forme d'entonnoir.

8. Dispositif selon la revendication 6 ou 7,
**caractérisé en ce que**
le second dispositif de guidage de fluide (13) est placé en particulier symétriquement dans l'évidement du corps de base (18), et débouche dans le canal central (23) introduit dans le corps de base (18).

9. Dispositif selon l'une quelconque des revendications précédentes,
**caractérisé en ce que**
le premier dispositif de guidage de fluide (12) et/ou le second dispositif de guidage de fluide (13) présente au moins la forme d'un entonnoir, d'une cartouche ou d'une buse.

10. Dispositif selon l'une quelconque des revendications précédentes,
**caractérisé en ce que**
le second dispositif de guidage de fluide (13) injecte dans le canal central (23) le second fluide conduit dans celui-ci dans la zone de mélange (16) et s'y mélange avec le premier fluide conduit dans le premier dispositif de guidage de fluide (12).

11. Dispositif selon la revendication 11,
**caractérisé en ce que**
le second dispositif de guidage de fluide (13) placé dans l'évidement du corps de base (18) qui est en contact avec le premier fluide sur sa face externe (24), comporte le revêtement (25) au moins par zone sur cette face externe (24), en particulier dans un environnement de la zone de mélange (16).

12. Utilisation du dispositif selon l'une quelconque des revendications précédentes, comme injecteur de gaz, soupape de buse, compresseur de jet ou pour l'alimentation de carburant dans une cellule de carburant, en particulier pour mélanger de l'hydrogène et de la vapeur d'eau.
